# FASCICULE DE BREVET EUROPEEN

(11) **EP 0 419 357 B1**
(45) Date de publication et mention de la délivrance du brevet: **08.11.1995**
(21) Numéro de dépôt: 90402592.1
(22) Date de dépôt: 20.09.1990
(51) Int. Cl.: G01N 30/46

(54) **Procédé et dispositif de dosage d'impuretés dans un gaz par chromatographie en phase gazeuse et utilisation pour la calibration d'impuretés dopantes dans le silane**
Verfahren und Vorrichtung zur Dosierung von Verunreinigungen in einem Gas durch Gaschromatographie und Anwendung zur Kalibrierung von dotierenden Verunreinigungen in Silan
Process and device for dosage of impurities in a gas with gas chromatography and use for calibrating doping impurities in silane

(30) Priorité: 22.09.1989 FR 8912447
(43) Date de publication de la demande: 27.03.1991
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Bryselbout, Francis, F-78320 Le Mesnil Saint Denis (FR); Mauvais, Patrick, F-78450 Villepreux (FR)
(74) Mandataire: Le Moenner, Gabriel

(56) Documents cités:
- FR-A- 2 256 702
- FR-A- 2 366 564
- US-A- 3 168 823
- US-A- 4 454 043
- SOVIET INVENTIONS ILLUSTRATED, Derwent Publ. Ltd., semaine 8737, abrégé no. 262535, E37, 23 Septembre 1987 & SU-A-12 86988

## Description

La présente invention a pour objet un procédé et un dispositif de dosage d'impuretés dans un gaz par chromatographie en phase gazeuse ainsi que l'utilisation d'un tel procédé pour la calibration d'impuretés dopantes à l'état de trace dans le silane. Le document US-A-3168823 révèle un procédé de dosage d'impuretés dans un gaz par chromatographie en phase gazeuse conforme au préambule de la revendication 1.

La technique chromatographique ne permet pas dans les conditions normales d'atteindre des seuils de détection inférieurs à environ 2.10⁻² ppm.volume. Or, il peut être nécessaire de doser des impuretés se trouvant dans un gaz à l'état de traces en des quantités inférieures. C'est en particulier le cas lors de l'utilisation du silane dans la fabrication des semi-conducteurs. Ce gaz doit en effet contenir des impuretés gazeuses dites dopantes telles que la phosphine (PH₃), l'arsine (AsH₃) ou le sulfure d'hydrogène (H₂S). L'action de ces impuretés une fois incorporées dans le semi-conducteur doit être maîtrisée et maintenue à un niveau très précis, tout écart pouvant être gênant si ce niveau de concentration, lui-même très bas, est dépassé. C'est ainsi qu'il peut être nécessaire de détecter dans le silane des traces de phosphine et d'arsine ne dépassant pas 10⁻⁵ ppm.volume afin de pouvoir garantir la qualité du silane utilisé dans la fabrication des semi-conducteurs.

L'invention a donc pour objet d'abaisser les seuils de détection des techniques chromatographiques en phase gazeuse, en particulier jusqu'à un niveau de détection de l'ordre de 10⁻⁵ ppm.volume.

Le procédé de dosage d'impuretés dans un gaz par chromatographie en phase gazeuse selon l'invention comprend les étapes suivantes :
on fait passer le gaz chargé d'impuretés dans une colonne remplie de granulés d'un produit adsorbant capable d'adsorber les impuretés, ladite colonne étant maintenue à une température aussi basse que possible sans toutefois atteindre la température de liquéfaction du gaz; on élève ensuite la température de la colonne et on y fait passer un courant d'un gaz vecteur afin de désorber les impuretés; on entraîne les impuretés ainsi désorbées dans le courant de gaz vecteur tel que de l'hélium, traversant la colonne; on procède ensuite à une chromatographie en phase gazeuse préliminaire, cette opération pouvant être réalisée sélectivement pour chaque impureté à analyser se trouvant dans le gaz; on fait ensuite passer le gaz vecteur après désorption, à la sortie du dispositif de chromatographie préliminaire, dans une colonne capillaire maintenue à une température aussi basse que possible; puis on élève la température de la colonne capillaire afin de désorber les impuretés et on les entraîne par un courant de gaz neutre porteur; et enfin on dose les impuretés dans un dispositif détecteur qui peut être avantageusement un détecteur à photoionisation.

Le dispositif de dosage d'impuretés selon l'invention permettant la mise en oeuvre du procédé comprend un dispositif de piégeage cryogénique des impuretés, muni d'une colonne remplie de granulés d'un produit adsorbant les impuretés, de moyens de réfrigération capables de maintenir la colonne à basse température pendant le passage du gaz chargé en impuretés et de moyens de réchauffage en vue de la désorption ultérieure. Le dispositif comprend également un premier chromatographe en phase gazeuse en vue d'une analyse préliminaire, un dispositif de recentrage cryogénique des impuretés muni d'une colonne capillaire, de moyens de réfrigération capables de maintenir la colonne à basse température pendant le passage d'un gaz vecteur ayant traversé le premier chromatographe et de moyens de réchauffage pour la désorption. Le dispositif comprend enfin un deuxième chromatographe en phase gazeuse muni d'un dispositif de détection.

On utilise avantageusement le procédé de dosage selon l'invention pour la calibration d'impuretés dopantes à l'état de traces à 10⁻⁵ ppm.volume dans le silane. A cet effet, on dilue les impuretés désirées dans un banc de dilution à plusieurs étages, le silane étant additionné au dernier étage de dilution, on dose les impuretés en mettant en oeuvre le procédé de dosage de l'invention et on rétroagit éventuellement sur le banc de dilution pour obtenir les quantités d'impuretés désirées.

L'invention sera mieux comprise à l'étude de la description détaillée d'un exemple de réalisation décrit à titre nullement limitatif et illustré par les dessins annexés sur lesquels :
la figure 1 illustre schématiquement les principaux constituants d'un dispositif de dosage d'impuretés selon l'invention;
la figure 2 est une vue en coupe schématique du dispositif de piégeage cryogénique utilisé dans l'invention;
la figure 3 est une vue en coupe schématique du dispositif de recentrage cryogénique utilisé dans la présente invention; et
la figure 4 illustre schématiquement un système de calibration d'impuretés dans un gaz tel que le silane à très basse concentration.

Dans les exemples illustrés, on décrira principalement l'invention dans une application de dosage d'impuretés dopantes telle que la phosphine, l'arsine et le sulfure d'hydrogène dans le silane. On comprendra bien entendu que l'invention pourrait s'appliquer sans modification au dosage d'autres impuretés dans un autre gaz.

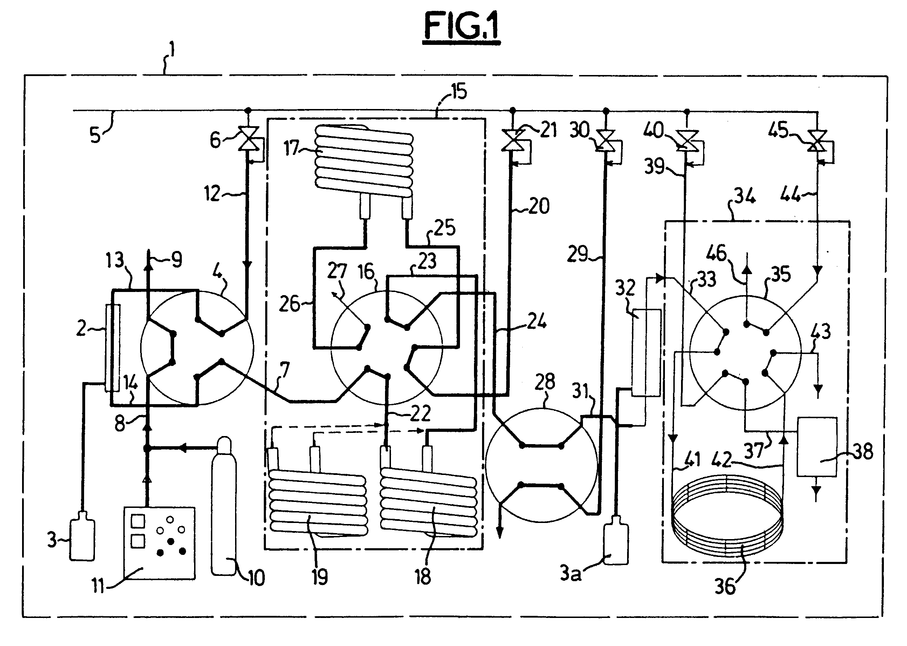

Tel qu'il est illustré sur la figure 1 le dispositif de dosage d'impuretés 1 par chromatographie en phase gazeuse selon l'invention comprend un dispositif de piégeage cryogénique 2 qui peut être alimenté par exemple en azote liquide provenant du réservoir 3. Une première vanne d'injection référencée 4 dans son ensemble est représentée schématiquement sur la figure dans la position dite d'injection pour laquelle un gaz vecteur tel que de l'hélium provenant de la canalisation générale 5 et traversant le régulateur de débit 6 passe par la vanne d'injection 4 avant de traverser le piège cryogénique 2 et de ressortir par le conduit 7. Dans cette position, le gaz chargé d'impuretés provenant de la conduite 8 est mis à l'atmosphère par la conduite d'échappement 9. A titre d'exemple on a représenté ici en outre une bouteille d'un gaz pur tel que du silane 10 et un système de calibration par dilution 11 permettant d'introduire dans le silane pur des impuretés dopantes telles que la phosphine, l'arsine et le sulfure d'hydrogène.

On maintient dans le dispositif de piègeage cryogénique une température basse mais cependant supérieure à la température de liquéfaction du gaz pur, par exemple ici du silane.

On maintient cette température tant que la vanne reste dans la position d'injection illustrée sur la figure, le gaz vecteur pénétrant par la conduite 12 et traversant donc la boucle d'échantillonnage 13, 14 comprenant le piège cryogénique 2. Pour l'adsorption des impuretés dans le dispositif de piégeage cryogénique, on place au contraire la vanne d'injection dans la position inverse non représentée sur la figure. C'est alors le mélange gazeux provenant de la conduite 8 qui traverse la boucle d'échantillonnage en pénétrant par la conduite 14 dans le piège cryogénique 2 puis en ressortant par la conduite 13 avant d'être mis à l'air libre par la conduite 9. Dans cette position, le gaz vecteur passe directement de la conduite d'entrée 12 à la conduite de sortie 7.

On procède alors à la désorption des impuretés en élevant la température du dispositif de piègeage 2 après avoir remis la vanne 4 en position d'injection comme illustré sur la figure 1.

La conduite de sortie 7 est connectée à l'entrée d'un premier chromatographe en phase gazeuse référencé 15 dans son ensemble et comportant une vanne d'injection à huit voies référencée 16 et illustrée schématiquement dans les mêmes conditions que la vanne 4. Le chromatographe 15 comporte dans l'exemple illustré deux colonnes à remplissage enroulées en serpentin 17 et 18 capables d'analyser successivement deux impuretés distinctes. On a également représenté sur la figure 1 une troisième colonne à remplissage en serpentin 19 qui peut remplacer la colonne 18 afin de permettre l'analyse et la détection d'une troisième impureté. Le gaz vecteur tel que l'hélium alimente le chromatographe 15 par la conduite 20 reliée à la conduite générale 5 par le régulateur de débit 21.

Dans la position d'injection illustrée sur la figure 1 le gaz neutre porteur, entraînant les impuretés désorbées et provenant comme on le verra du piège cryogénique 2 par la conduite 7, traverse tout d'abord la colonne 18 par la conduite 22 puis revient à la vanne 16 par la conduite 23 avant de ressortir du chromatographe 15 par la conduite 24. Le gaz vecteur provenant de la conduite 20 pénètre par la conduite 25 dans la colonne 17 avant de revenir à la vanne 16 par la conduite 26 puis d'être mis à l'air libre par la conduite 27.

L'analyse des impuretés réalisée dans le chromatographe 15 sur les colonnes 17, 18 et s'il y a lieu 19 permet d'obtenir un seuil de détection de l'ordre de 2.10⁻⁴ à 10⁻⁴ ppm.volume grâce à la concentration frigorifique de l'échantillon réalisée dans le piège cryogénique 2. Les pics détectés des différentes impuretés sont cependant encore très aplatis et il convient de procéder à un recentrage de ces pics d'impuretés à la sortie des précolonnes 17, 18 et 19.

A cet effet, la conduite de sortie 24 est reliée à une vanne à quatre voies 28 qui peut être purgée par le gaz vecteur provenant de la conduite 29 reliée à la conduite générale 5 par le régulateur de débit 30. La conduite de sortie 31 issue de la vanne 28 est reliée à l'entrée du dispositif de recentrage cryogénique d'impuretés référencé 32 dans son ensemble. Ce dispositif est refroidi par de l'azote liquide provenant du réservoir 3a à une température aussi basse que possible. On notera que, contrairement à ce qui était le cas pour le dispositif de piégeage cryogénique 2 où il convenait de ne pas atteindre la température de liquéfaction du gaz pur tel que le silane, le problème ne se pose plus dans le dispositif de recentrage cryogénique 32 le gaz véhiculant les impuretés étant le gaz vecteur tel que l'hélium. Il est donc possible d'abaisser encore la température pendant la phase d'adsorption. Le dispositif de recentrage cryogénique des impuretés 32 est muni comme on le verra d'une colonne capillaire et sa sortie 33 est relié à l'entrée d'un deuxième chromatographe en phase gazeuse référencé 34 dans son ensemble. Le deuxième chromatographe 34 comprend une vanne d'injection à huit voies 35. Le chromatographe 34 comprend également une colonne capillaire enroulée en serpentin 36 et un détecteur à photoionisation 38 relié à la sortie 35. Dans la position illustrée sur la figure 1, le gaz neutre porteur alimenté par la conduite 39 comportant un régulateur de débit 40 traverse la vanne d'injection 35 et est amené au détecteur 38. On élève la température dans le dispositif de recentrage 32 ce qui provoque la désorption. Le gaz vecteur chargé en impuretés provenant du dispositif de recentrage cryogénique 32 traverse la vanne 35 puis par la conduite 41 et la colonne capillaire 36 avant de revenir par la conduite 42 et d'être mis à l'air libre par la conduite 43. Un écoulement de balayage du gaz vecteur provenant de la conduite 44 comportant un régulateur de débit 45 est également mis à l'air libre par la conduite 46 après avoir traversé la vanne d'injection 35.

Le deuxième chromatographe permet d'obtenir une précision d'analyse de 10⁻⁵ ppm.volume.

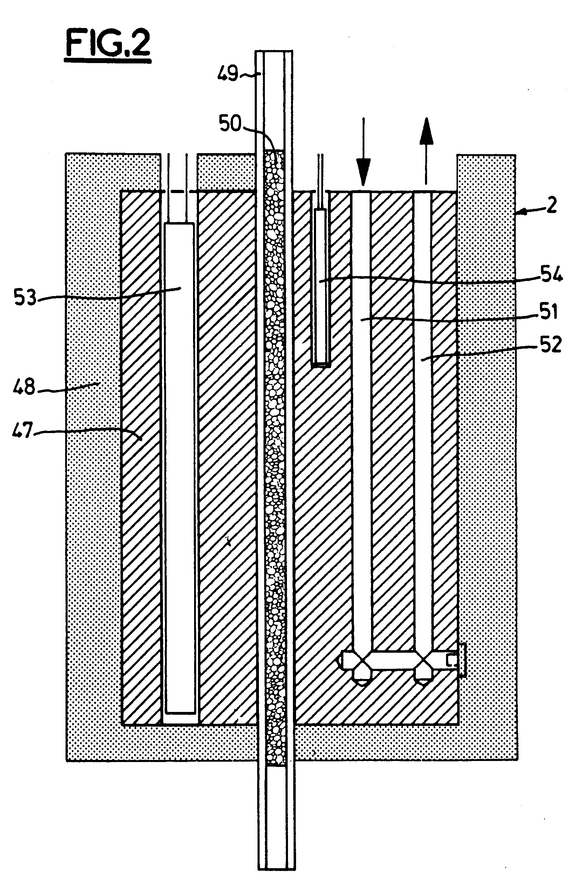

La figure 2 illustre schématiquement un mode de réalisation du dispositif de piégeage cryogénique 2. Celui-ci comprend un corps central 47 entouré d'un matériau isolant 48. Le corps central 47 est traversé sensiblement selon son axe par un tube d'échantillonnage 49 rectiligne constituant une colonne à remplissage de granulés 50 d'un produit capable d'adsorber les impuretés que l'on souhaite analyser. Le fluide réfrigérant constitué par exemple par de l'azote liquide pénètre dans la canalisation d'entrée 51 et ressort par la canalisation de sortie 52 après avoir traversé toute la hauteur du corps 47 et assuré ainsi son refroidissement ainsi que celui du tube d'échantillonnage 49. Une bougie chauffante 53 disposée également sur toute la hauteur du corps 45 permet de réchauffer le tube d'échantillonnage pour procéder à la désorption. Une sonde de mesure de température 54 permet la régulation de la température et le maintien du tube d'échantillonnage à basse température pendant la phase d'adsorption des impuretés.

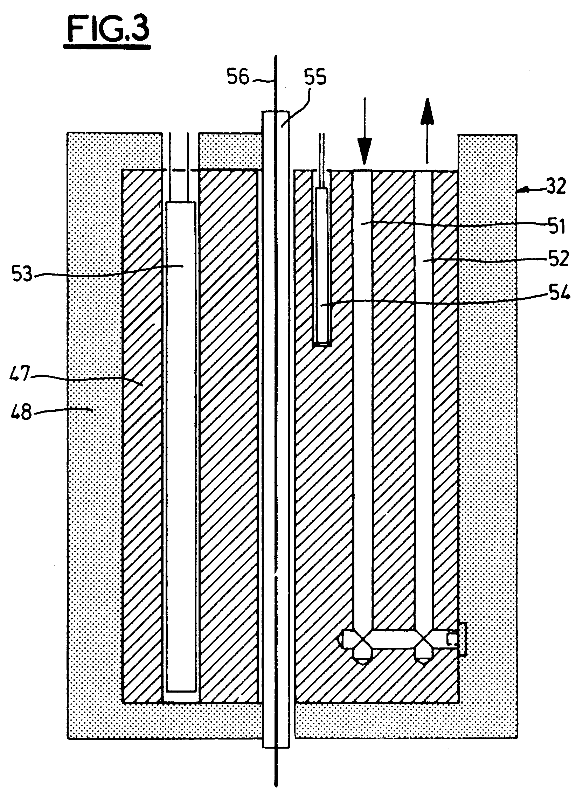

Le figure 3 illustre le dispositif de recentrage cryogénique 32. Celui-ci présente la même structure générale que le dispositif de piégeage 2. Il comporte en effet un corps central similaire également référencé 47 en un matériau isolant 48 et des canalisations de refroidissement 51, 52. On y retrouve une sonde de mesure 54 et une bougie chauffante 53 pour la désorption. La différence réside dans le remplacement du tube d'échantillonnage 49 par un tube central 55 présentant un alésage capillaire permettant le montage d'une colonne capillaire 56 rectiligne qui s'étend sur la hauteur du corps 47.

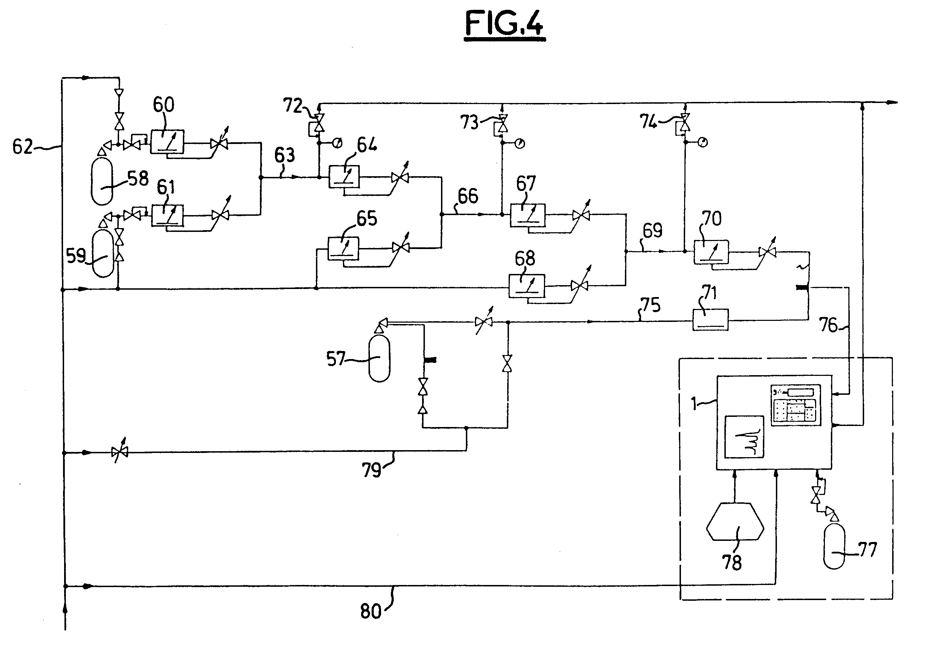

La figure 4 illustre une installation de calibration des impuretés. A titre d'exemple il s'agit ici d'introduire dans du silane pur se trouvant dans le réservoir 57 des impuretés dopantes constituées par de la phosphine, de l'arsine et du sulfure d'hydrogène. A cet effet, le réservoir 58 contient un mélange d'azote, de phosphine et d'arsine et le réservoir 59 contient un mélange d'azote et de sulfure d'hydrogène. Un premier étage de dilution dans de l'azote comprend les deux régulateurs de débit massique 60 et 61 dont les entrées sont respectivement connectées aux réservoirs 58 et 59 ainsi qu'à la canalisation principale d'azote 62 tandis que leur sortie commune 63 alimente un deuxième étage de dilution dans l'azote. Le deuxième étage de dilution comprend également deux régulateurs de débit massique 64 et 65. La sortie 66 du deuxième étage est connectée au troisième étage de dilution dans l'azote comprenant les deux régulateurs de débit massique 67 et 68. Leur sortie commune 69 est reliée au quatrième étage réalisant la dilution finale dans le silane et comportant les deux régulateurs de débit massique 70 et 71. On notera que les régulateurs de débit massique 64, 67 et 70 sont en outre connectés aux déverseurs 72, 73 et 74. Le silane provenant du réservoir 55 est amené par la conduite 75 au quatrième étage de dilution par le régulateur 71. Le silane ainsi chargé en impuretés est amené par la conduite 76 au dispositif de dosage chromatographique 1 qui reçoit par ailleurs le gaz vecteur contenu dans le réservoir 77 et peut être alimenté, en vue de la réfrigération de ses éléments, en azote liquide contenu dans le réservoir 78.

Le circuit se complète par des canalisations de purge en azote 79 et 80.

La mesure et l'analyse des impuretés réalisées par le dispositif de dosage 1 permet de rétroagir sur les étages de dilution par des moyens non illustrés sur la figure, de façon à obtenir finalement un mélange de silane parfaitement dosé en impuretés phosphine, arsine et sulfure d'hydrogène au niveau de 10⁻⁵ ppm.volume.

## Revendications

1. Procédé de dosages d'impuretés dans un gaz ayant une première température de liquéfaction par chromatographie en phase gazeuse, du type où l'on met en oeuvre deux piégeages d'impuretés à basse température et deux analyses chromatographiques, caractérisé en ce qu'il comprend les étapes suivantes :
- on refroidit, à l'aide d'un premier milieu cryogénique, une première colonne (49) remplie d'un produit adsorbant capable d'adsorber les impuretés, à une première basse température, supérieure à ladite première température de liquéfaction ;
- on fait passer le gaz chargé d'impuretés dans ladite première colonne, à ladite première basse température ;
- on élève la température de ladite première colonne et on y fait passer un courant d'un gaz vecteur ayant une seconde température de liquéfaction inférieure à ladite première température de liquéfaction du gaz comportant les impuretés afin de désorber les impuretés et les entraîner vers un premier chromatographe ;
- on procède dans le premier chromatographe à une chromatographie en phase gazeuse préliminaire, successivement pour chaque impureté à analyser ;
- on fait passer du gaz vecteur dans le premier chromatographe pour désorber les impuretés et les entraîner dans une colonne capillaire (56) maintenue, à l'aide d'un second milieu cryogénique, à une seconde basse température inférieure à la première basse température mais supérieure à la seconde température de liquéfaction ;
- on élève la température de la colonne capillaire et on y fait passer un courant de gaz vecteur, de façon à désorber les impuretés et les entraîner vers un second chromatographe muni d'un dispositif détecteur ;
- on procède, dans le second chromatographe, à une seconde chromatographie en phase gazeuse et on dose les impuretés dans le dispositif détecteur.

2. Procédé selon la revendication 1, caractérisé en ce que le dispositif détecteur est un détecteur à photo-ionisation.

3. Procédé selon l'une des revendications 1 ou 2, caractérisé en ce que lesdits milieux cryogéniques sont de l'azote liquide et ledit gaz vecteur est l'hélium.

4. Procédé selon l'une des revendications 1 à 3, caractérisé en ce que ledit gaz chargé en impuretés est du silane et en ce que lesdites impuretés sont comprises dans l'ensemble constitué de l'arsine, la phosphine et le sulfure d'hydrogène.

5. Dispositif de dosage d'impuretés pour la mise en oeuvre du procédé selon l'une des revendications 1 à 4, du type comprenant, connectables en série dans un circuit :
- un premier dispositif de piégeage (2) muni de moyens de refroidissement (3 ; 51-52) et de chauffage (53) ;
- un second dispositif de piégeage (32) muni de moyens de refroidissement (3a ; 51-52) et de chauffage (53) ;
- un premier chromatographe en phase gazeuse (15) ;
- un second chromatographe en phase gazeuse (34) ;
- un dispositif détecteur (38),
caractérisé en ce que :
- le premier chromatographe est connecté entre la sortie du premier dispositif de piégeage (2) et l'entrée du second dispositif de piégeage (32) ;
- le second chromatographe est connecté entre la sortie du second dispositif de piégeage (32) et le dispositif détecteur (38) ;
- le second dispositif de piégeage comporte une colonne capillaire (56) ;
- les moyens de refroidissement (3, 3a ; 51-52) des premier (2) et second (32) dispositifs de piégeage sont du type cryogénique.

6. Dispositif selon la revendication 5, caractérisé en ce qu'il comprend en outre des moyens pour faire circuler sélectivement dans les différents dispositifs, le gaz chargé d'impuretés et un gaz vecteur.

7. Dispositif selon les revendications 5 ou 6, caractérisé en ce que le détecteur (38) est un détecteur à photo-ionisation.

8. Dispositif selon l'une quelconque des revendications 5 à 7, caractérisé en ce que le premier chromatographe comporte au moins une colonne à remplissage en serpentin.

9. Dispositif selon l'une quelconque des revendications 5 à 8, caactérisé en ce que le deuxième chromatographe comporte une colonne capillaire enroulée en serpentin.

10. Utilisation du procédé et du dispositif de dosage selon l'une quelconque des revendications précédentes pour la calibration d'impuretés dopantes à l'état de traces à 10⁻⁵ ppm.volume dans un gaz pur tel que le silane, caractérisée en ce qu'on dilue les impuretés désirées dans le gaz pur dans un banc de dilution à plusieurs étages (11), on dose les impuretés selon la revendication 1 et on rétro-agit sur le banc de dilution pour obtenir les quantités d'impuretés désirées.

11. Utilisation selon la revendication 10, caractérisée en ce que les impuretés sont choisies parmi la phosphine, l'arsine, le sulfure d'hydrogène ou un mélange de ces impuretés.

## Claims

1. Method for the determination of impurities in a gas having a first liquefaction temperature, by gas chromatography, of the type in which two low-temperature impurity trappings and two chromatographic analyses are used, characterised in that it comprises the following steps:
- using a first cryogenic medium, a first column (49), filled with an adsorbent product able to adsorb the impurities, is cooled to a first low temperature, above the said first liquefaction temperature;
- the gas, containing impurities, is made to pass into the said first column, at the said low temperature;
- the temperature of the said first column is raised, and a current of carrier gas having a second liquefaction temperature lower than the said first liquefaction temperature of the gas including the impurities is made to pass therein, so as to desorb the impurities and entrain them towards a first chromatograph;
- in the first chromatograph, a preliminary gas chromatography is carried out successively for each impurity to be analysed;
- carrier gas is made to pass into the first chromatograph in order to desorb the impurities and entrain them into a capillary column (56) maintained, by means of a second cryogenic medium, at a second low temperature below the first low temperature but above the second liquefaction temperature;
- the temperature of the capillary column is raised and a current of carrier gas is made to pass therein, so as to desorb the impurities and entrain them towards a second chromatograph provided with a detection device;
- in the second chromatograph, a second gas chromatography is carried out and the impurities are determined in the detection device.

2. Method according to Claim 1, characterised in that the detection device is a photo-ionisation detector.

3. Method according to one of Claims 1 or 2, characterised in that the said cryogenic media are liquid nitrogen and the said carrier gas is helium.

4. Method according to one of Claims 1 to 3, characterised in that the said impurity-containing gas is silane and in that the said impurities are included in the group consisting of arsine, phosphine and hydrogen sulphide.

5. Device for determining impurities for the implementation of the method according to one of Claims 1 to 4, of the type comprising, able to be connected in series in a circuit:
- a first trapping device (2) provided with cooling (3; 51-52) and heating (53) means;
- a second trapping device (32) provided with cooling (3a; 51-52) and heating (53) means;
- a first gas chromatograph (15);
- a second gas chromatograph (34);
- a detection device (38),
characterised in that:
- the first chromatograph is connected between the output from the first trapping device (2) and the input to the second trapping device (32);
- the second chromatograph is connected between the output from the second trapping device (32) and the detection device (38);
- the second trapping device includes a capillary column (56);
- the cooling means (3, 3a; 51-52) of the first (2) and second (32) trapping devices are of the cryogenic type.

6. Device according to Claim 5, characterised in that it also comprises means for causing the impurity-containing gas and a carrier gas to circulate selectively in the different devices.

7. Device according to Claims 5 or 6, characterised in that the detector (38) is a photo-ionisation detector.

8. Device according to any one of Claims 5 to 7, characterised in that the first chromatograph has at least one coil-shaped filling column.

9. Device according to any one of Claims 5 to 8, characterised in that the second chromatograph has a second capillary column wound in a coil.

10. Utilization of the determination method and device according to any one of the preceding claims for the calibration of doping impurities in the form of traces at 10⁻⁵ ppm by volume in a pure gas such as silane, characterised in that the required impurities in the pure gas are diluted in a dilution bench having several stages (11), the impurities are determined according to Claim 1 and retroaction is undertaken on the dilution bench in order to obtain the desired quantities of impurities.

11. Utilization according to Claim 10, characterised in that the impurities are chosen from amongst phosphine, arsine, hydrogen sulphide or a mixture of these impurities.

## Patentansprüche

1. Verfahren zur Bestimmung von Verunreinigungen in einem Gas mit einer ersten Verflüssigungstemperatur mittels Gaschromatographie, bei dem man zwei Verunreinigungs-Abscheidungen bei niedriger Temperatur und zwei chromatographische Analysen durchführt, gekennzeichnet durch die folgenden Schritte:
- man kühlt mit Hilfe eines ersten Tiefsttemperaturmittels eine erste mit einem zur Adsorption der Verunreinigungen geeigneten adsorbierenden Stoff gefüllte Kolonne (49) auf eine erste niedrige Temperatur, die höher als die erste Verflüssigungstemperatur ist, ab;
- man läßt das mit Verunreinigungen belastete Gas bei der ersten niedrigen Temperatur durch die erste Kolonne strömen;
- man erhöht die Temperatur der ersten Kolonne und läßt in dieser einen Schleppgasstrom mit einer zweiten Verflüssigungstemperatur strömen, die niedriger als die erste Verflüssigungstemperatur des die Verunreinigungen aufweisenden Gases ist, um die Verunreinigungen zu absorbieren und diese einem ersten Chromatographen zuzuleiten;
- man führt in dem ersten Chromatographen aufeinanderfolgend für jede zu analysierende Verunreinigung eine vorläufige Gaschromatographie durch;
- man läßt im ersten Chromatographen Schleppgas strömen, um die Verunreinigungen zu absorbieren und diese einer kapillaren Kolonne (56) zuzuleiten, die mit Hilfe eines zweiten Tiefsttemperaturmittels auf einer zweiten niedrigen Temperatur gehalten wird, die niedriger als die erste niedrige Temperatur, jedoch höher als die zweite Verflüssigungstemperatur ist;
- man erhöht die Temperatur der kapillaren Kolonne und läßt in dieser einen Schleppgasstrom strömen, um die Verunreinigungen zu absorbieren und diese einem zweiten, mit einer Detektorvorrichtung versehenen Gaschromtographen zuzuleiten; und
- man führt in dem zweiten Chromatographen eine zweite Gaschromatographie durch und bestimmt die Verunreinigungen in der Detektorvorrichtung.

2. Verfahren nach Anspruch 1, dadurch gekennzeichnet, daß die Detektorvorrichtung ein Photoionisationsdetektor ist.

3. Verfahren nach einem der Ansprüche 1 oder 2, dadurch gekennzeichnet, daß die Tiefsttemperaturmittel flüssiger Stickstoff sind, und daß das Schleppgas Helium ist.

4. Verfahren nach einem der Ansprüche 1 bis 3, dadurch gekennzeichnet, daß das mit Verunreinigungen belastete Gas Silan ist, und daß die Verunreinigungen von der durch Arsin, Phosphin und Hydrogensulfid gebildeten Gruppe umfaßt werden.

5. Vorrichtung zur Bestimmung von Verunreinigungen zur Anwendung des Verfahrens gemäß einem der Ansprüche 1 bis 4 und der Bauart, die, zu einem Kreislauf verbindbar,
- eine erste, mit Mitteln zur Kühlung (3; 51-52) und zur Erwärmung (53) versehene Scheidevorrichtung (2);
- eine zweite, mit Mitteln zur Kühlung (3a; 51-52) und zur Erwärmung (53) versehene Scheidevorrichtung (32);
- einen ersten Gaschromatographen (15);
- einen zweiten Gaschromatographen (34); und
- eine Detektorvorrichtung (38) umfaßt;
dadurch gekennzeichnet, daß
- der erste Chromatograph zwischen den Ausgang der ersten Scheidevorrichtung (2) und dem Eingang der zweiten Scheidevorrichtung (32) geschaltet ist;
- der zweite Chromatograph zwischen den Ausgang der zweiten Scheidevorrichtung (32) und die Detektorvorrichtung geschaltet ist;
- die zweite Scheidevorrichtung eine kapillare Kolonne (56) umfaßt, und
- die Mittel zur Kühlung (3, 3a; 51-52) der ersten (2) und dem zweiten (32) Scheidevorrichtungen nach dem Tiefsttemperaturprinzip arbeiten.

6. Vorrichtung nach Anspruch 5, dadurch gekennzeichnet, daß diese ferner Mittel umfaßt, die in den verschiedenen Vorrichtungen wahlweise das mit den Verunreinigungen belastete Gas und ein Schleppgas zirkulieren lassen.

7. Vorrichtung nach einem der Ansprüche 5 oder 6, dadurch gekennzeichnet, daß der Detektor (38) ein Photoionisationsdetektor ist.

8. Vorrichtung nach einem der Ansprüche 5 bis 7, dadurch gekennzeichnet, daß der erste Chromatograph zumindest eine schlangenförmig verlaufende Beschickungskolonne umfaßt.

9. Vorrichtung nach einem der Absprüche 5 bis 8, dadurch gekennzeichnet, daß der zweite Chromatograph eine schlangenförmig gewickelte kapillare Kolonne umfaßt.

10. Verwendung des Verfahrens und der Vorrichtung zur Bestimmung gemäß einem der vorangehenden Ansprüche zur Einstellung von dotierenden Verunreinigungen auf einen Spurenzustand von 10⁻⁵ ppm·Volumen in einem reinen Gas wie Silan, dadurch gekennzeichnet, daß man die in dem reinen Gas gewünschten Verunreinigungen in einer mehrstufigen Verdünnerbank (11) verdünnt, die Verunreinigungen gemäß Anspruch 1 bestimmt und auf die Verdünnerbank zurückwirkt, um die gewünschten Verunreinigungsmengen zu erhalten.

11. Verwendung nach Anspruch 10, dadurch gekennzeichnet, daß die Verunreinigungen aus Phosphin, Arsin, Hydrogensulfid oder einem Gemisch dieser Verunreinigungen ausgewählt werden.
